# EUROPEAN PATENT SPECIFICATION

(11) **EP 3 483 851 B1**
(45) Date of publication and mention of the grant of the patent: **14.10.2020**
(21) Application number: 18204844.7
(22) Date of filing: 07.11.2018
(51) Int. Cl.: G08B 13/16

(54) **INTELLIGENT SOUND CLASSIFICATION AND ALERTING**
INTELLIGENTE KLANGKLASSIFIZIERUNG UND ALARMIERUNG
CLASSIFICATION ET ALERTE SONORES INTELLIGENTES

(30) Priority: 08.11.2017 US 201715806865
(43) Date of publication of application: 15.05.2019
(73) Proprietor: Honeywell International Inc., Morris Plains, NJ 07950 (US)
(72) Inventor: CHANG, Harry M., Morris Plains, NJ 07950 (US); PALANISAMY, Prabhu, Morris Plains, NJ 07950 (US); KULKARNI, Amit, Morris Plains, NJ 07950 (US)
(74) Representative: Houghton, Mark Phillip

(56) References cited:
- WO-A1-2015/191722
- US-A1- 2016 163 168
- US-A1- 2016 241 818
- US-A1- 2016 379 456

## Description

### Background

Detecting home intrusion and/or other abnormal events at a home can be important to home owners. Traditional solutions include using a video camera to monitor various entrance points and windows of a home. Another common solution is to use a motion detection device installed at a home. More recently there are some new products combing both video monitoring and motion detection technology into a single device for detecting home intrusion and/or monitoring activities at a residential home.

WO20150191722 discloses a method and system for detecting a premise condition by detecting a sound, determining whether the sound belongs to a recognized class of sounds, and causing a predetermined response to occur based on the recognized class.

### Summary

The present invention in its various aspects is as set out in th appended claims. In one or more embodiments, a device includes a microphone, sound classifier circuitry to analyze signals from the microphone and determine a profile for each of the spliced segments, the profile indicating one or more spectral, time, or amplitude characteristics of the signals, a sounds profile memory to store sound profiles of audio sources in a building in which the device resides, and sound profile manager circuitry to determine whether the profile sufficiently matches a sound profile of the sound profile memory and, in response to a determination that the sound profile does not sufficiently match any sound profiles in the sound profile memory, provide a communication to a sound profile exchange remote to the device, the communication requesting the sound profile exchange to determine an audio source to associate with the sound profile.

In one or more embodiments, a method can include converting, by a microphone, sound waves to electrical signals, analyzing, at sound classifier circuitry, the electrical signals, splicing, at the sound classifier circuitry, segments of the electrical signals with different spectral, time, or amplitude characteristics therefrom, determining, at the sound classifier circuitry, a profile for each of the spliced segments, the profile indicating spectral content, time characteristics, and amplitude characteristics of the spliced segment, determining, using sound profile manager circuitry, whether the profile sufficiently matches a sound profile stored in a local sound profile memory, the sound profile memory storing sound profiles of audio sources detected in a building in or around which the microphone resides, and in response to determining the sound profile does not sufficiently match any sound profiles in the sound profile memory, providing a communication to a sound profile exchange remote to the sound profile manager circuitry, the communication requesting the sound profile exchange to determine an audio source to associate with the sound profile.

In one or more embodiments, a system can include a sound profile exchange including sound profiles from remote networks stored thereon, a device remote to the sound profile exchange, the device comprising a microphone, sound classifier circuitry to analyze signals from the microphone and splice segments of the signals with different spectral, time, or amplitude characteristics therefrom and determine a profile for each of the spliced segments, the profile indicating spectral content, time characteristics, and amplitude characteristics of the spliced segment, a sounds profile memory to store sound profiles of audio sources captured by the microphone, and sound profile manager circuitry to determine whether the profile sufficiently matches a sound profile of the sound profile memory and, in response to a determination that the sound profile does not sufficiently match any sound profiles in the sound profile memory, provide a communication to the sound profile exchange, the communication requesting the sound profile exchange to determine an audio source to associate with the sound profile.

### Brief Description of The Drawings

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates, by way of example, a logical diagram of an embodiment of an audio classification and alerting system.
FIG. 2 illustrates, by way of example, a diagram of an embodiment of an audio classification and alerting system that includes an exploded view of a classification device of FIG. 1.
FIG. 3 illustrates, by way of example, a diagram of an embodiment of an audio waveform that has been classified.
FIG. 4 illustrates, by way of example, a spectrum diagram of an embodiment of background noise in a building.
FIG. 5 illustrates, by way of example, a diagram of an embodiment of a sound profile.
FIG. 6 illustrates, by way of example, a diagram of an embodiment of another audio classification and alert system.
FIG. 7 illustrates, by way of example, a diagram of an embodiment of a method for audio classification and alerting.
FIG. 8 illustrates, by way of example, a diagram of an embodiment of another method for audio classification and alerting.
FIG. 9 illustrates, by way of example, a block diagram of an embodiment of a computing device.

### Detailed Description

Examples in this disclosure relate to apparatuses and systems that include audio classification and alerting.

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media or computer readable storage device such as one or more memory or other type of hardware based storage devices, either local or networked. Further, such functions may be implemented using one or more modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

There are at least three problems with a class of current commercial products and technical solutions for home intrusion alerting. First, some of the technology uses video content to detect intrusion or unexpected events at home. This technology does not have required knowledge to tell if a recorded action in the video is a normal household activity or an action by an intruder or other action for which an alert is to be provided. Similarly, motion detection technology merely detects any motion regardless of the entity moving. That is, motion detection technology does not have, for example, an intelligence to differentiate kids running from a thief running away with stolen goods.

Embodiments described include a new technology called an "Intelligent Sound Classifier" (ISC). The ISC can be used as part of an Internet-connected video camera or other Internet-connected device that includes a microphone. The technology provides a capability of learning an association between detected sounds at a given home, and the origin of the sounds (an audio source). The knowledge acquired by the ISC during the learning process can be stored as Sound Profile Models (SPM), such as in the form of data tables. This SPM can be uploaded to and downloaded from a centralized sound profile exchange (SPE) so that the knowledge can be shared among devices with ISC technology thereon. The SPMs can download only profiles from buildings or rooms that include similar sound profiles.

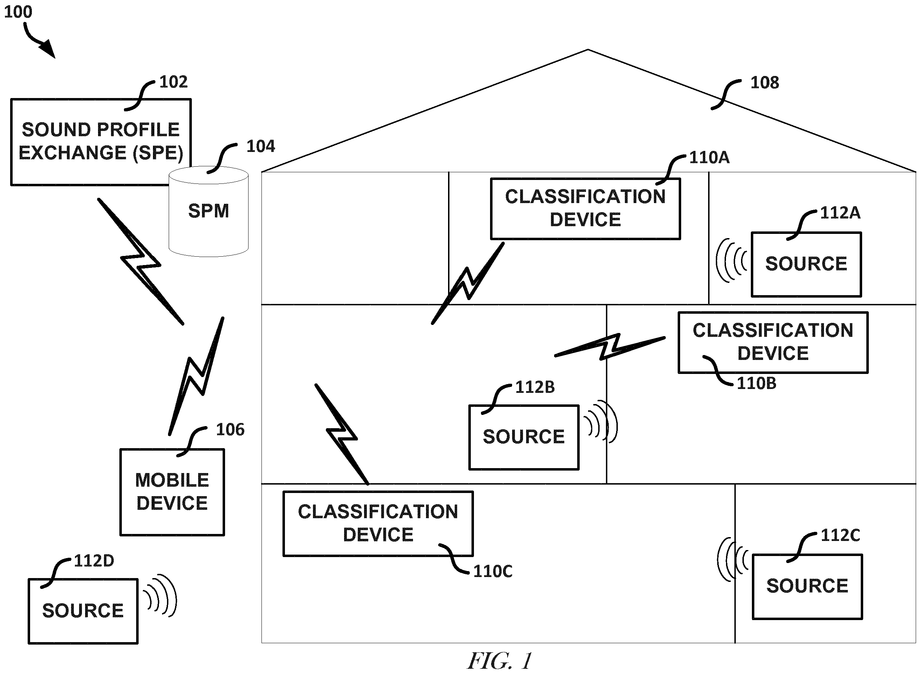

FIG. 1 illustrates, by way of example, a logical diagram of an embodiment of an audio classification and alerting system 100. The system 100 as illustrated includes an SPE 102, a mobile device 106, and a networked building 108. The SPE 102 as illustrated includes the SPM memory 104. The networked building 108 as illustrated includes a plurality of classification devices 110A, 110B, and 110C and audio sources 112A, 112B, and 112C. The system 100 as illustrated includes an audio source 112D external to the building 108. The classification device 110A-110C can record sound originating from one or more of the sources 112A-112D. The waveform of the sound recorded from each of the sources 112A-112D is dependent on the structure of the building 108 and relative locations of the sources 112A-112D and the classification devices 110A-110C.

Components of the networked building 108, mobile device 106, and the SPE 102 can communicate with each other. The components of the networked building 108 can provide the mobile device 106 with alerts indicating that audio with an unknown profile was detected. The components of the networked building 108 can provide the mobile device with alerts indicating that audio associated with an SPM was detected and the SPM indicates that the mobile device 106 is to be alerted. One or more of the alerts can include one or more of a copy of the audio, a time at about which the audio was recorded, video captured around the time the audio was recorded, an identifier of a component that recorded the audio and/or video, or the like. The mobile device 106 can provide an interface through which a user (e.g., a tenant or other occupant of the networked building 108) can provide feedback to the components of the networked building 108 and/or the SPE 102.

The SPE 102 can include a memory, such as a random-access memory, such as a database. The SPE 102 can be remote or local to the networked building 108. Remote means that the SPE 102 is hosted on a different network than a network of the networked building 108. Local means that the SPE 102 is hosted on a network of the networked building 108. The database can be a relational, non-relational, or other database. The SPMs in the SPM memory 104 of the SPE 102 can be organized by characteristic, tag, networked building from which the SPM originated, a combination thereof, or the like. The SPM memory 104 is accessible by the SPE 102.

The SPMs in the SPM memory 104 detail frequency, amplitude, and/or time characteristics of different audio sources. The SPMs in the SPM memory 104 can include data indicating a source of the audio of the SPM. The SPMs can include data regarding dimensions (e.g., length, width, and/or height), materials, or other characteristics of a room in which the classification device 110A-110C is situated. Sources of audio for the SPMs can include, for example, for a residential building, door opening, door closing, person speaking, person walking, heater running, dog barking, car/truck moving, garbage truck, bus, window opening, sliding door opening/shutting, shower, sink water, music, television, pet noise, alarm(s) (e.g., carbon monoxide, fire, security system, or the like), or the like. Sources of audio for the SPMs can include, for example, for a commercial building, door opening, door closing, person speaking, person walking, heater running, dog barking, car/truck moving, garbage truck, person typing, bus, window opening, sliding door opening/shutting, sink water, music, television, manufacturing facility operating, heating, ventilation, and/or air conditioning system operating, (e.g., carbon monoxide, fire, security system, or the like) or the like. In general, the SPMs in the SPM memory 104 detail characteristics of everyday actions in or around the networked building 108.

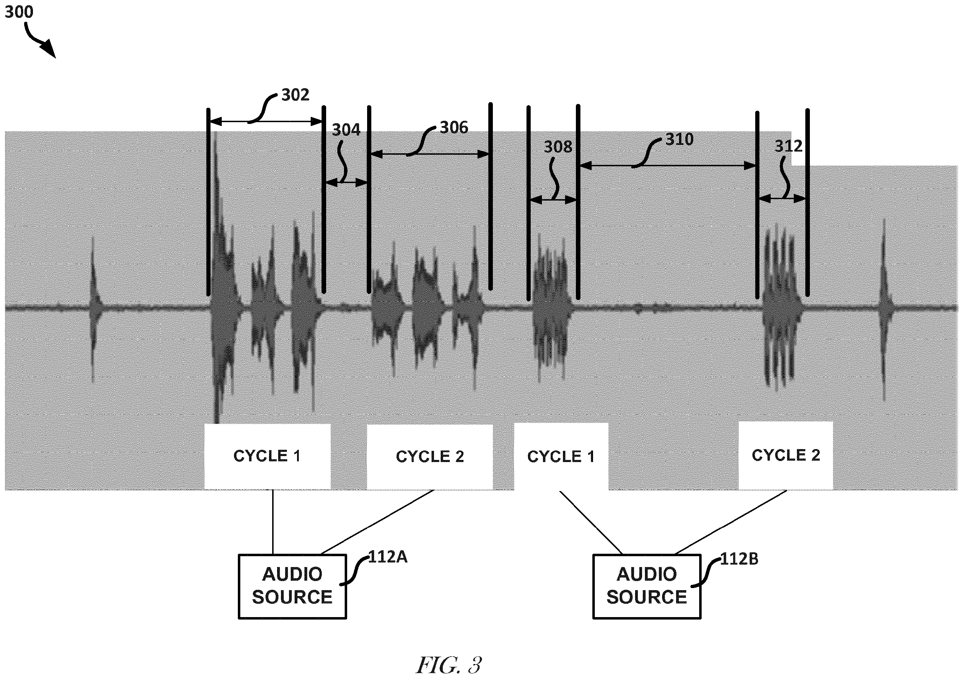

The SPMs can include the characteristics, as recorded by one or more of the classification devices 110A-110C. Since many buildings have different floorplans, wall heights, materials used in manufacturing the networked building 108, or the like, the acoustics of such buildings are likely different. That is, in a first building, the audio source 112A-112C may have a first SPM (e.g., one of the SPMs in the SPM memory 104), but when placed in a different location in the first building or in a different building, the audio source 112A-112C may have a second, different SPM (e.g., another of the SPMs in the SPM memory 104). FIG. 3 illustrates an example of a few waveforms, such as to help describe details of the SPMs in the SPM memory 104.

The SPMs in the SPM memory 104 can be provided to the SPE 102 by a variety of classification devices 110A-110C and/or from a variety of different buildings. The SPMs in the SPM memory 104 can be exchanged between the classification devices 110A-110C and/or the SPE 102.

The mobile device 106 can include a smart phone, tablet, desktop computer, laptop, vehicle, smart television, or other device capable of connecting to a network of the networked building 108, the Internet, and/or communicating with the SPE 102. The mobile device 106 can communicate with a classification device 110A-110C, such as to receive alerts from the classification device 110A-110C. The mobile device 1096 can provide a feedback communication to the classification device 110A-110C. The feedback communication can indicate a tag that is to be associated with an SPM. For example, the classification device 110A-110C can provide the mobile device 106 with an alert indicating that audio that does not sufficiently match any of the SPMs in the SPM memory 104. A user of the mobile device 106 may listen to audio provided in the communication using the mobile device 106. The user can initiate a communication from the mobile device 106 that indicates to the classification device 110A-110C a source of the audio, whether the classification device 110A-110C is to provide the alert if the audio is detected again, or the like. The classification device 110A-110C can update an SPM to include the data provided by the mobile device 106.

The classification device 110A-110C includes a microphone, a memory, or other circuitry (e.g., an amplifier, bandpass, high pass, low pass, or other filter, resistors, transistors, inductors, capacitors, regulators, power sources, or the like) to process, record, and store audio. In one or more embodiments, the classification device 110A-110C can include transceiver circuitry (e.g., a receive and transmit radio, modulator, demodulator, amplifier, antenna, transistors, resistors, inductors, capacitors, oscillators, or the like). In one or more embodiments, the classification device 110A is a master device and the classification devices 110B-110C are slave devices. The master device collects data from the other classification devices and communicates directly with the SPE 102 and/or mobile device 106. The slave devices communicate indirectly with the SPE 102 and/or the mobile device 106 through the master device.

In one or more embodiments, the classification device 110A-110C is capable of detecting, processing, and analyzing the sound from a microphone on its own, such as without being connected to the cloud (e.g., the SPE 102). Such embodiments can help enable the classification device 110A-110C to work properly even during interruption of Internet service. When the classification device 110A-110C is connected to the cloud, it can send a sound alert notification to the SPE 102. The SPE 102 can use more powerful computer servers to analyze an alert and make critical adjustments to the alert messages before sending it out to the intended mobile device 106.

In one or more embodiments, the classification device 110A-110C is built into another device, such as a camera (e.g., a security camera). In one or more embodiments, the classification device 110A-110C is a standalone device, such as can be mounted on a wall, situated on a shelf, hung from the ceiling, or otherwise positioned to survey audio and/or video in the networked building 108.

The source 112A-112D includes a person, appliance (e.g., microwave, oven, television, stereo, washer, dryer, air heater or conditioner, water heater, sink/faucet, vent, detector (e.g., carbon monoxide, fire, or other detector), vehicle, door, animal (e.g., indoor and/or outdoor pet, wild animal, or other animal), airplane, window, garage door, lawn mower, snow blower, or other object or entity that produces audio. The source 112A-112D produces audio which is surveyed by the classification device 110A-110C.

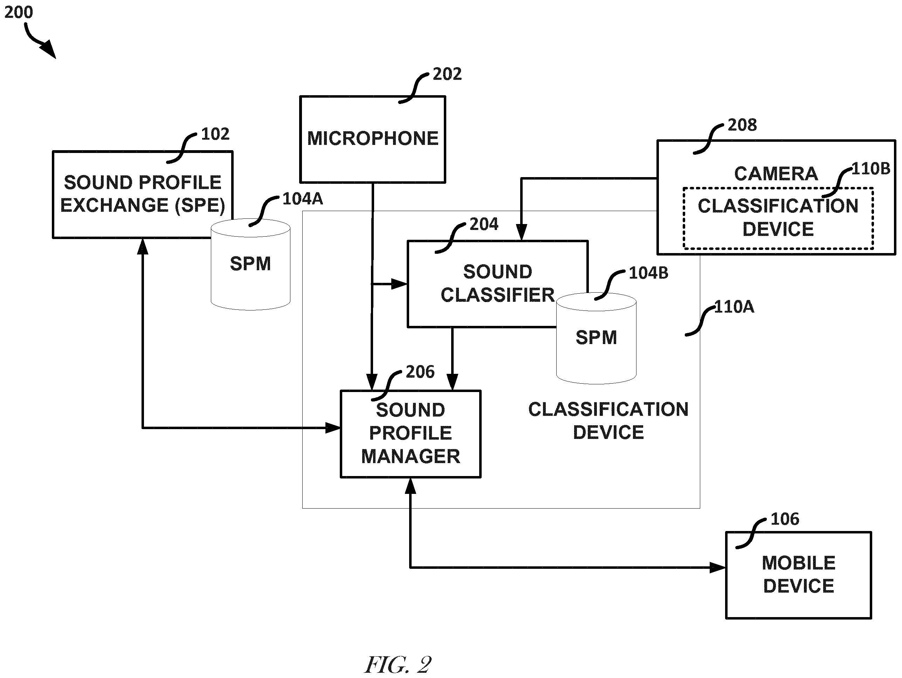

FIG. 2 illustrates, by way of example, a diagram of an embodiment of an audio classification and alerting system 200 that includes an exploded view of a classification device of FIG. 1. The system 200 as illustrated includes the SPE 102, the mobile device 106, the classification device 110A, a microphone 202, and an optional camera 208. The classification device 110A as illustrated includes SPM memory 104B, sound classifier circuitry 204, and sound profile manager circuitry 206. The SPE 102 is illustrated as including the SPM memory 104A which is a specific instance of the SPM memory 104 in a different location.

The microphone 202 converts sound waves into electrical signals. The microphone 202 can include a directional or omnidirectional microphone. The microphone 202 can be situated to receive audio from the source 112A-112D. The electrical signals from the microphone can be provided to the sound classifier circuitry 204 and/or the sound profile manager circuitry 206.

The sound classifier circuitry 204 analyzes audio (electrical signals that represent audio) from the microphone 202, splices sections of audio to be associated with an SPM, and determines a source of the audio. Determining the source of the audio can include comparing the audio (in a splice) to SPMs of the SPM memory 104B. The comparison can include a comparison of a frequency spectrum, timing profile, amplitude profile, or other characteristics of the audio. For example, consider audio with a frequency profile that includes a spike at 400Hz, an amplitude that spikes at 30dB, and a timing profile of two second bursts of sound with one second of silence between bursts. Further, consider an SPM that includes a frequency profile that includes a spike at 420Hz, an amplitude that spikes at 33dB, and a timing profile of two second bursts of sound with one second of silence between bursts. The sound classifier circuitry 204 can determine that the audio is from the same source as the source associated with that SPM. In contrast, consider an SPM that includes a frequency profile that includes a spike at 1.2kHz, an amplitude that spikes at 7dB, and a timing profile of half second bursts of sound with a half second of silence between bursts. The sound classifier circuitry 204 can determine that the audio is from a different source as the source associated with that SPM.

The sound classifier circuitry 204 can analyze audio by using a set of techniques on each slice of audio segments. For example, consider an unknown audio is recorded by a microphone 202, digitized at 16000 samples per second by the sound classifier 204, and kept in a circular data buffer of the sound classifier 204. The digitized data can be sliced into a frame of a few hundred samples. Two adjacent frames may overlap in time, such as to smooth the underlying feature vectors in the following steps. For example, the first frame may contain from sample #1 to sample #400, the second frame may contain from sample #200 to sample #600, and so on.

The framed speech samples can be processed by extracting its hidden features in time domain or frequency domain. The results are multidimensional feature vectors. This group of feature vectors can be sent simultaneously to multiple classification devices 110A-110C, each preconfigured with a specific SPM 206 for determining if the current slice of the audio segment matches, to a certain degree, a specific SPM. A feature vector may contain information about the amplitude of the current slice. Another feature vector may contain spectral profile over a specific frequency range such as between 1000 Hz and 2000 Hz. The classification device 110A-110C can send the matching score to a decision panel (e.g., of a classification device 110A-110C or the like) which ultimately decides the ranking of matching scores (relative to the matched SPMs) for the current slice of audio signals.

The ranking of matching scores for all previous slices processed so far can be reviewed by the classification device 110A-110C to decide if the audio heard so far is most likely originated from a known source (e.g., a smoke alarm device, a baby crying, or a dog barking, etc.). If no SPM is matched with a pre-determined confidence level or there is more time allocated for processing the incoming audio signals, repeat the process, that is, taking another slice of audio segment from the microphone buffer.

In response to determining, at the sound classifier circuitry 204, that an SPM produced by the sound classifier circuitry 204 does not sufficiently match any SPMs of the SPM memory 104B, the sound classifier circuitry 204 can provide an alert to the mobile device 106. In response to determining that an SPM sufficiently matches an SPM of the SPM memory 104B that includes data indicating that the mobile device 106 is to be alerted when a sufficient match is found, the sound classifier can provide an alert to the mobile device 106. In response to determining, that an SPM produced by the sound classifier circuitry 204 does not sufficiently match any SPMs of the SPM memory 104B, the sound classifier circuitry 204 can determine whether the SPE 102 includes an SPM in the SPM memory 104A that sufficiently matches the SPM produced by the sound classifier circuitry 204. The SPE 102 can respond to the sound classifier circuitry 204, such as through the sound profile manager circuitry 206. The SPE 102 can provide an SPM from the SPM memory 104A that sufficiently matches the SPM from the sound classifier to the sound classifier circuitry 204, store the SPM from the sound classifier circuitry 204 in the SPM memory 104A (in response to determining that no SPM in the SPM memory 104A sufficiently matches the SPM from the sound classifier circuitry 204), and/or provide a communication indicating that no SPMs in the SPM memory 104A sufficiently match the SPM provided by the sound classifier. In one or more embodiments, the mobile device 106 is alerted in response to a communication from the SPE 102 indicating that no SPMs in the SPM memory 104A sufficiently matches the SPM provided by the sound classifier circuitry 204.

The sound profile manager circuitry 206 can facilitate communications between the sound classifier circuitry 204 and the SPE 102 and/or the mobile device 106. The sound profile manager circuitry 206 can include circuitry to communicate with the mobile device and/or the SPE 102. The sound profile manager circuitry 206 can analyze and compare SPMs, such as from the sound classifier circuitry 204 and/or the SPM memory 104A-104B, such as to determine a source of audio. Determining the source of the audio can include comparing an SPM from the sound classifier circuitry 204 to an SPM of the SPM memory 104A-104B. The comparison can include a comparison of a frequency spectrum, timing profile, amplitude profile, or other characteristics of the audio. For example, consider a received audio with a frequency profile that includes a spike at 400Hz, an amplitude that spikes at 30dB, and a timing profile of two second bursts of sound with one second of silence between bursts. Further, consider an SPM that includes a frequency profile that includes a spike at 420Hz, an amplitude that spikes at 33dB, and a timing profile of two second bursts of sound with one second of silence between bursts. The sound classifier circuitry 204 can determine that the audio is from the same source as the source associated with that SPM. In contrast, consider an SPM that includes a frequency profile that includes a spike at 1.2kHz, an amplitude that spikes at 7dB, and a timing profile of half second bursts of sound with a half second of silence between bursts. The sound profile manager circuitry 206 can determine that the audio is from a different source as the source associated with that SPM.

The sound profile manager circuitry 206 can provide one or more commands to the sound classifier circuitry 204 that cause the sound classifier circuitry 204 to store, alter, or otherwise manage SPMs in the SPM memory 104B. For example, in response to receiving an SPM from the SPE 102, the sound profile manager circuitry 206 can provide a command that causes the sound classifier circuitry 204 to store the SPM in the SPM memory 104B.

As shown embodiments can be implemented as a video camera device with the ISC circuitry (e.g., the circuitry of the classification device 110A). Alternatively, it can be built as a small listening device with a Wi-Fi or wired network connection. The ISC system can include a client device and a set of software services, such as can be provided from a cloud-based platform. The SPMs created from one client device can be shared and used by other client device loaded with other instantiations of the ISC (e.g., sound profile manager circuitry 206 and sound classifier circuitry 204).

Consider an embodiment in which two classification devices 110A-110B are installed in a same building. When audio from the same source associated with an SPM is detected by both classification devices, their corresponding reading of the amplitude of the same sound will likely be different. The one closer to the sound source or with less sound barrier will likely have a higher amplitude reading.

For example, one classification device is installed on the ground floor in a front hallway listening to the sound near the front door and the other classification device is installed on 2^{nd} floor near the stairs. If the sound detected is from a smoke alarm device on 2^{nd} floor. The classification device on the 2^{nd} floor will likely register a higher amplitude than the amplitude detected by the classification device on the 1^{st} floor.

Both classification devices can send out an alert message to the mobile device. To help prevent multiple messages for the same event, the message can first be reviewed by a local or cloud-based "Intelligent Messenger Handler". This agent can be a part of the SPE, a master classification device, or the like. The agent can examine both messages, recognizing that the both messages have the same timestamp and same tag. The agent can use the amplitude information to decide that the sound source is closer to the 2^{nd} floor. The agent can combine both messages into one with an extra note explaining the most likely location of the source (e.g., the alarm sound is from the 2^{nd} floor in this example).

FIG. 3 illustrates, by way of example, a diagram of an embodiment of an audio waveform 300 that has been classified or is to be classified by the sound classifier circuitry 204. The audio waveform 300 includes audio received from two different audio sources 112A and 112B. The sound classifier circuitry 204 can determine which portions of the waveform 300 are more likely from the same audio source and which portions of the waveform 300 are from different audio sources. The differences between the audio produced by the audio sources can be determined in time characteristics (e.g., an amount of time making sound, silence between sounds, or the like), frequency characteristics (e.g., different spectral fingerprints, such as different peaks at different frequencies), and/or different amplitude characteristics.

In the example of the waveform 300, the frequency content, amplitude, and time characteristics are of the audio from the audio sources 112A and 112B are different. The audio source 112A provides a burst of tones for a first time period 302, has silence between a burst of tones (three tones in quick succession) at a second time period 304, and has another burst of tones (three tones in quick succession in this example) for a third time period 306. The first time period 302 and the third time period 306 can be of the same, or nearly the same, duration. The audio source 112B, in contrast provides a more continuous tone for a fourth time period 308, has silence between continuous tones at a fifth time period 310, and has another continuous tone for a sixth time period 312. The fourth time period 308 and the sixth time period 312 can be of the same, or nearly the same, duration. The second time period 304 is shorter than the fifth time period 310, the frequency content, the continuity of sound, and the amplitudes of the waveforms are different can help the sound classifier distinguish between audio from the audio sources 112A and 112B.

As shown in FIG. 3, the audio source 112A sounds include multiple cycles. Each cycle consists of two or more chirps and there is a short pause (e.g., about 1 second) between two cycles. For carbon monoxide alarm sounds, see audio source 112B for example, the inter-cycle silence is considerably longer (e.g., about 4.5 seconds). In a real smoke/fire situation, smoke alarm or CO alarm sounds will contain these cycles of chirp sounds with their respective inter-cycle pauses for a few minutes. There is no standard, at least, for the North America market, for the technical specifications of how these chirp sounds should be generated, what is the center frequency of beep tones, or what time intervals exist between beep tones. As a result, it is very difficult to develop a single sound detection algorithm for detecting the sounds from all different smoke/CO alarm devices, which are installed at millions of homes today.

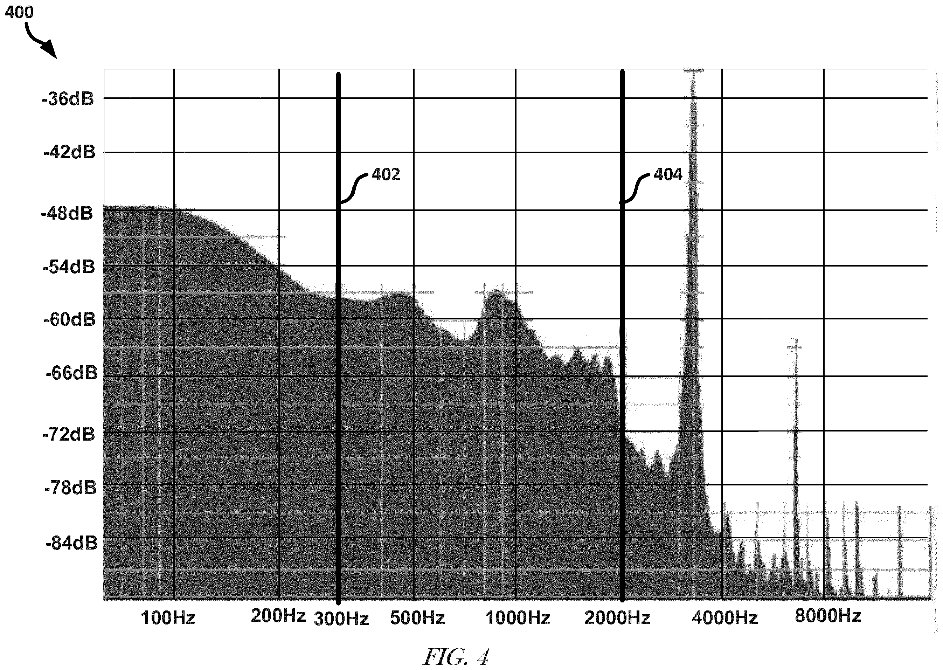

FIG. 4 illustrates, by way of example, a spectrum diagram of an embodiment of background (e.g., ambient) noise 400 in a networked building. The sound classifier circuitry 204 can record ambient or background noise and filter the background noise out from audio from the microphone 202. In one or more embodiments, the sound classifier circuitry 204 can include one or more high pass, low pass, and/or bandpass filters that filter out background noise. In one or more embodiments, the bandpass filter can pass only spectral content that is at a frequency between a minimum frequency threshold 402 and a maximum frequency threshold 404. In the embodiment of FIG. 4, the minimum frequency threshold is about 300Hz and the maximum frequency threshold is about 2kHz.

Embodiments of the ISC systems and devices described can use a combination of spectral analysis (frequency characteristics) and temporal analysis (time characteristics) (e.g., in time domain) techniques to encode the unique sound characteristics of each smoke/CO alarm device installed at home. The audio signals associated with the sound produced by each smoke/CO or other type of home security or home appliances include at least two components: (a) a main alarm sound consisting of one or two beep tones centered at a specific frequency (in the example of FIG. 4, it is at 3200Hz ); and (b) the other part consisting of background noise from a variety of sound sources. To human ears, this type of background noise is represented by the sound in a broad frequency range between 300Hz and 2000Hz. By segmenting each audio recording of the sounds generated by a smoke/CO alarm device, or other audio source, into two regions, the sound classifier circuitry 204 can more reliably recognize what is the true alarm sound and what is the background noise.

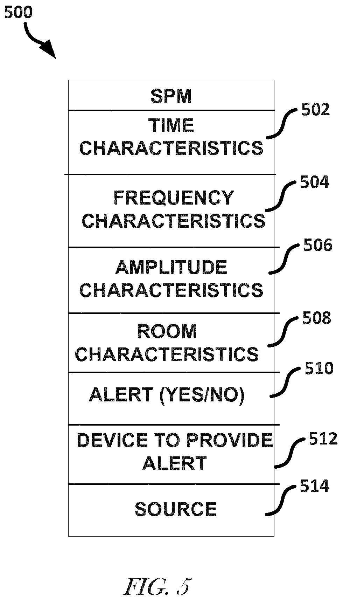

FIG. 5 illustrates, by way of example, an embodiment of an SPM 500. The SPM 500, as previously discussed, can be stored in the SPM memory 104A-104B. The SPM 500 as illustrated includes time characteristics 502, frequency characteristics 504, amplitude characteristics 506, room characteristics 508, alert indication data 510, data indicating a device to which to provide an alert 512, and source data 514 indicating an audio source (e.g., data indicating one of the sources 112A-112D).

The time characteristics 502 can include one or more of an amount of time a sound of the audio is audible, an amount of time between consecutive sounds of the audio, a time of day at which the audio was recorded, a date on which the audio was recorded, or the like. The time characteristics 502 can be determined using an oscillator, a clock, or the like of the sound classifier circuitry 204.

The frequency characteristics 504 can include the spectral content of the signals (audio) from the microphone 202. The spectral content indicates one or more frequencies or ranges of frequencies determined to be present in the audio. In one or more embodiments, the spectral content includes only frequencies not filtered out by a bandpass filter. The frequency characteristics 504 can be determined using a Fourier transform, or the like.

The amplitude characteristics 506 indicate an amplitude of the audio in the time domain or power or energy in the frequency domain. The amplitude characteristics 506 can be determined using a Fourier transform, an analog to digital converter, or the like.

The room characteristics 508 can indicate a length, width, height, material, windows, doors, or other characteristics of a room that can affect audio in the room. The room characteristics 508 can be provided by a user of the mobile device 106, such as in response to a communication from the sound profile manager circuitry 206 requesting the room characteristics 508.

The alert indication data 510 indicates whether an alert is to be provided to the mobile device 106 in response to determining that a sound profile from the sound classifier circuitry 204 sufficiently matches a sound profile in the sound profile memory 104B. The alert indication data 510 can include a bit indicating a first value for yes - provide an alert - and a second value for no - do not provide an alert. The alert indication data 510 can be provided by a user of the mobile device 106, such as in response to a communication from the sound profile manager circuitry 206 requesting the alert indication data 510.

The data indicating a device to which to provide the alert 512 indicates a phone number, internet protocol address, email address, or the like, which is to receive the alert in response to determining the sound profile sufficiently matches a sound profile in the sound profile memory 104B.

The source data 514 indicates the audio source 112A-112D. The source data 514 can indicate a name, make, model, class, or the like of the audio source 112A-112D. The name can include a first name, surname, pet name, or the like. The class can indicate a category of objects of which the name is a member, such as can include "pet", "person", "animal", "appliance", "vehicle", or the like.

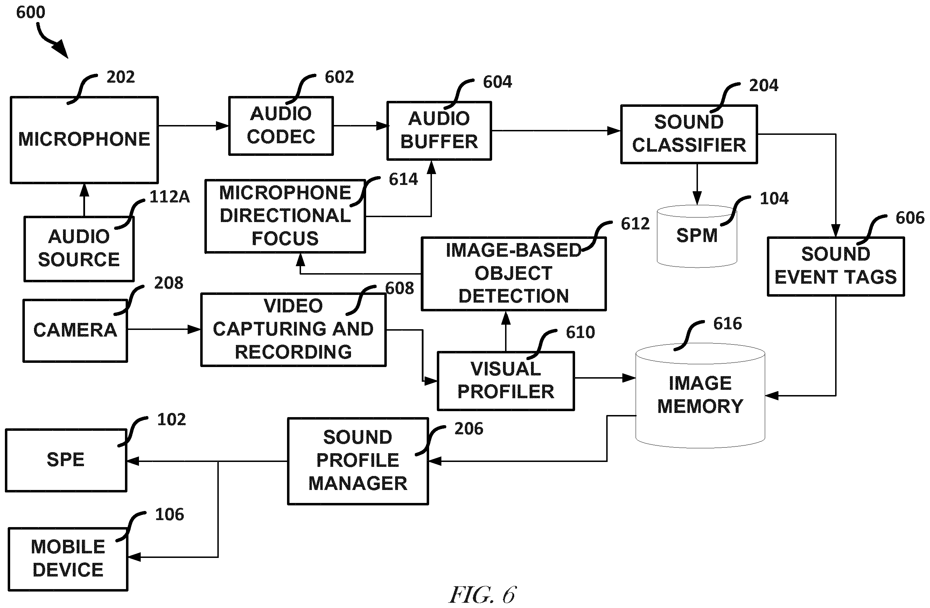

FIG. 6 illustrates, by way of example, an embodiment of another system 600 for audio classification and/or alerting. The system 600 as illustrated includes the audio source 112A, the microphone 202, an audio codec 602, an audio buffer 604, the sound classifier circuitry 204, the SPM memory 104, sound event tags 606, an image memory 616, video capturing and recording circuitry 608, visual profiler circuitry 610, image-based object detection circuitry 612, microphone directional focus circuitry 614, the sound profile manager circuitry 206, the SPE 102 and the mobile device 106. The embodiment of FIG. 6 includes the microphone 202 and the camera 208, such as to help supplement the audio classification with video data and/or analytics.

If a device with ISC technology is implemented with the video camera 208, the audio and video source data can be captured (e.g., continuously or intermittently) using the audio codec 602 associated with the microphone 202 and the camera 208, respectively. The audio data can be stored in the buffer 604 (e.g., a first-in, first-out (FIFO), or other buffer). The sound classifier circuitry 204 can retrieve the audio data stored in the buffer 604. The sound classifier circuitry can compute the spectral bands for SPMs. At or around the time the SPMs are being generated from the incoming sound, the video signals captured by video capturing and recording circuitry 608 can be processed by visual profiler circuitry 610, such as to create a visual profile associated with the audio source 112A. Image-based object detection circuitry 612 can delineate and/or identify an object in the video that may be a source of the sound. For example, baby crying sounds can be recorded to the audio buffer 604 while the camera 208 is pointing to the baby's face.

Microphone directional focus circuitry 614 can alter a focus of the microphone 202, such as to "point" the microphone 202 in a direction from which sound is originating. For example, if a microphone 202 is pointed at a door, and it is determined that a sound is originating from a window across the room, the microphone directional focus circuitry 614 can alter the focus of the microphone 202, or physically alter the direction the microphone 202 is pointed, to better capture the sound by the window. The sound event tags 606 can include The image memory 616 stores images and associates images with their corresponding sound event tags 606. The combination of a visual profile with a synchronized audio tagging information can be used to further increase the confidence of a decision by the device for detecting certain sounds in a specific room environment.

The sound event tags 606 can include descriptors for each SPM matched and the corresponding confidence levels at which a SPM is matched to the audio signals heard so far by the classification devices 110A-110C. The sound event tags 606 can include the beginning and ending frame numbers of the audio segments matched to the known SPMs. The sound event tags 606 can include the loudness rating of the audio segments matched to the known SPMs. The sound event tags 606 can include the location designation for the classification devices 110A-110C (e.g., located in kitchen or master bedroom on 2^{nd} floor).

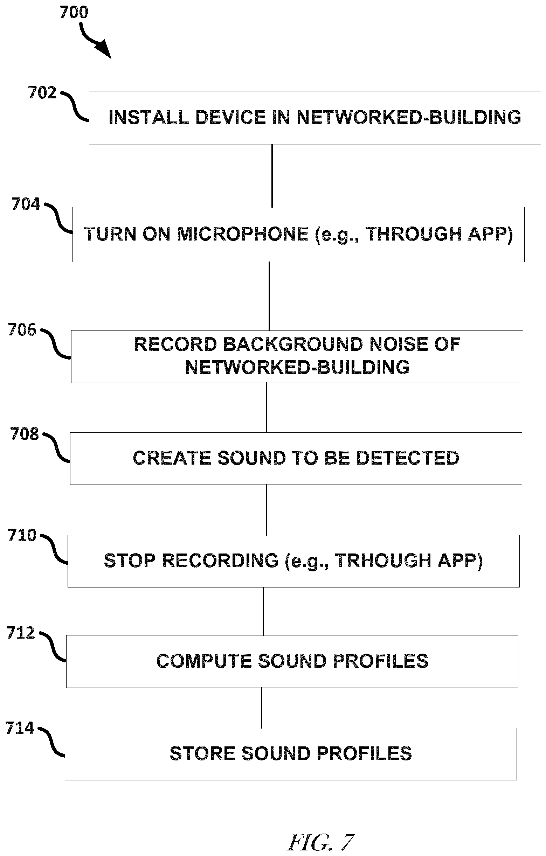

Using a set of signal processing methods to compute Signal to Noise Ratio (SNR), power, frequency, amplitude, or the like, and encode the relationships between each chirp sound in both time and frequency domain, the ISC can generate a unique SPM for each sound-generating device installed at a specific location. The same process can be applied to detecting baby crying sounds, dog barking, or detecting specific phrases to be spoken by a human like "I need help" or "I am calling the police". A process of learning sounds and their associated audio sources is described with regard to FIG. 7.

It is possible that the classification device 110A-110C recognizes, by mistake, a sound from a first source as a sound from a second source. The classification device 110A-110C can provide a communication message to the mobile device 106 in response to the erroneous detection. The user can receive the message, listen to the audio recording embedded in the message, and discover the error. The user, through the mobile device 106, can provide a communication to the classification device 110 that causes the classification device 110A-110C to update the SPM to be associated with a different audio source. The communication can be used to update other portions of the SPM, such as the alert indication data or the other SPM data.

FIG. 7 illustrates, by way of example, a diagram of an embodiment of a method 700 of associating audio sources with audio and/or video data, such as can include an SPM. The method as illustrated includes: Install the device with ISC technology at a desired location in building, at operation 702; the learning process can be started, such as by turning on the microphone (e.g., through an app), at operation 704; the microphone can "listen" to the normal background noise for a period of time (e.g., a few seconds), at operation 706; creating a sound to be detected, such as by the ISC, at operation 708; stop audio recording (e.g., using the app), at operation 710; computing sound profiles, at operation 712; for each new SPM created, the SPM can be stored in an SPM memory of sound classifier circuitry or an SPE (with user permission), at operation 714.

The operation 708 can include one or more of the following: pressing the "test" button on a smoke/CO alarm device; operating a home appliance such as an oven so that it would generate certain sounds (e.g., after reaching a certain temperature it would produce certain beep tones); creating a situation where one or more babies start to cry for attention; shouting loudly for a few seconds; pounding a door or a window to generate loud sound; instructing a dog to bark inside or outside the building; and turning on the outdoor water outlet so that the sound of watering running is audible.

The operation 712 can include determining sound profiles over different spectral bands, such as can include different frequency ranges. The operation 712 can further include, storing only a subset of the determined sound profiles as the SPM, such as to include only one, two, or three of the sound profiles over the different spectral bands. The sound classifier circuitry can use SNR-based measurements to determine when a new sound is being produced. This can continue until the sound classifier circuitry determines that only background noise is being heard, and the sound is no longer detected. The sound recording can then be stopped.

The method 700 can further include, after the learning procedure for each unique sound source to be detected, the device can be switched to a normal operation mode. Using the SPMs created from all the background noise recordings, the ISD device can be listening all the time. When detecting any sound with an SNR value measured at higher than the averaged SNR values from the SPMs associated with the background noise, the sound classifier circuitry can compute the spectral bands, timing data, and/or amplitude, such as for a short interval of audio samples, (e.g., a recording of lOOms of audio signals for an incoming sound wave). For each slice of audio signals received from the microphone, the sound classifier circuitry can compare it against all the SPMs created for the camera or microphone. A similarity metric can be computed using the spectral bands and timing data generated from the incoming sound and that from each SPM previously created during the learning process. If the similarity metric is greater than (or equal to) a pre-determined threshold for one or more previously created SPMs, the device can generate an alert in various forms, indicating the detecting of a known sound source. Such an alert can be implemented as an app notification so that the user can see it from their smartphone.

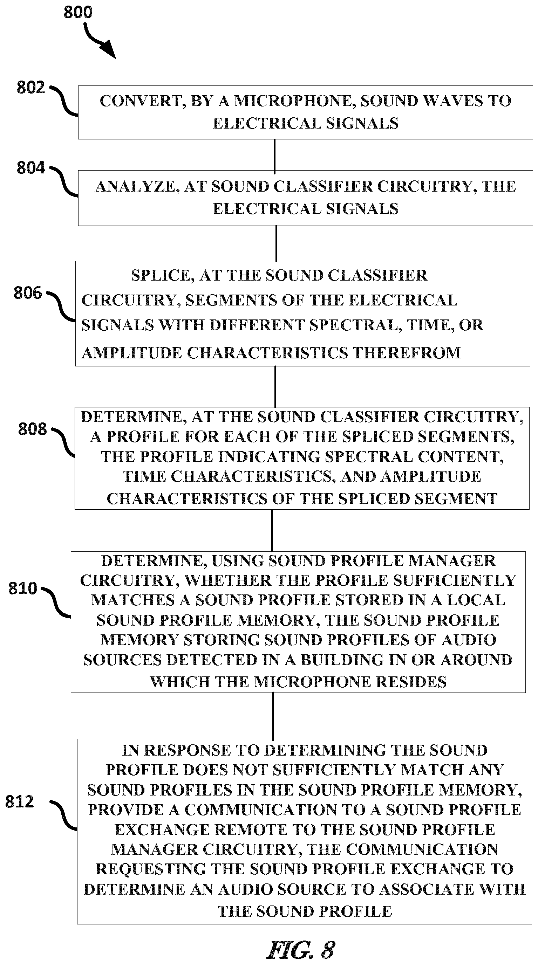

FIG. 8 illustrates, by way of example, a block diagram of an embodiment of another method 800 for audio classification and alerting. The method 800 as illustrated includes: converting, by a microphone, sound waves to electrical signals, at operation 802; analyzing, at sound classifier circuitry, the electrical signals, at operation 804; splicing, at the sound classifier circuitry, segments of the electrical signals with different spectral, time, or amplitude characteristics therefrom, at operation 806; determining, at the sound classifier circuitry, a profile for each of the spliced segments, the profile indicating spectral content, time characteristics, and amplitude characteristics of the spliced segment, at operation 808; determining, using sound profile manager circuitry, whether the profile sufficiently matches a sound profile stored in a local sound profile memory, the sound profile memory storing sound profiles of audio sources detected in a building in or around which the microphone resides, at operation 810; and in response to determining the sound profile does not sufficiently match any sound profiles in the sound profile memory, providing a communication to a sound profile exchange remote to the sound profile manager circuitry, the communication requesting the sound profile exchange to determine an audio source to associate with the sound profile, at operation 812.

The method 800 can further include associating, by the sound classifier circuitry, the sound profile with data indicating a source of sound from which audio of the sound profile segment originated based on video data from a camera. The method 800 can further include in response to determining that the sound profile does not sufficiently match any sound profiles in the sound profile memory and by the sound profile manager circuitry, providing a communication to a mobile device, the communication requesting a user of the mobile device to identify an audio source of the sound profile. The method 800 can further include, in response to receiving the audio source from the mobile device, associating the sound profile with the audio source in the sound profile memory.

The method 800 can further include, wherein the communication to the mobile device further includes a request to the user to indicate whether the user is to be alerted in response to determining that a sound profile from the sound classifier circuitry sufficiently matches the sound profile, and the method further comprises, providing, by the sound profile manager circuitry, a communication to the mobile device indicating that the audio source has been detected. The method 800 can further include in response to receiving an audio source from the sound profile exchange indicating the audio source for the sound profile, providing, by the sound profile manager circuitry, a communication to the mobile device requesting the user to indicate whether the user is to be alerted in response to determining that a sound profile from the sound classifier circuitry sufficiently matches a sound profile associated with the audio source. The method 800 can further include associating the sound profile with the audio source in the sound profile database.

The method 800 can further include in response to receiving a communication from the sound profile exchange indicating that an audio source for the sound profile cannot be determined, providing by the sound profile manager circuitry, a communication to the mobile device requesting the user to identify an audio source of the audio associated with the sound profile and indicate whether the user is to be alerted in response to determining that a sound profile from the sound classifier circuitry sufficiently matches a sound profile associated with the audio source and, in response to receiving a communication indicating an audio source from the mobile device, associate the sound profile with the audio source in the sound profile memory. The method 800 can further include, wherein the sound profile includes spectral content, time characteristics, and amplitude characteristics, wherein the spectral content identifies frequency content of the signals, the time characteristics identify an amount of time the signals include audio and an amount of time between sounds of the audio, and the amplitude characteristics indicate a maximum and minimum amplitude of the audio. The method 800 can further include, wherein the sound profile further includes room characteristics that identify characteristics of a room in which the device is situated that affect the audio. The method 800 can further include, wherein the room characteristics include a length, width, and height of the room and a material used to enclose the room.

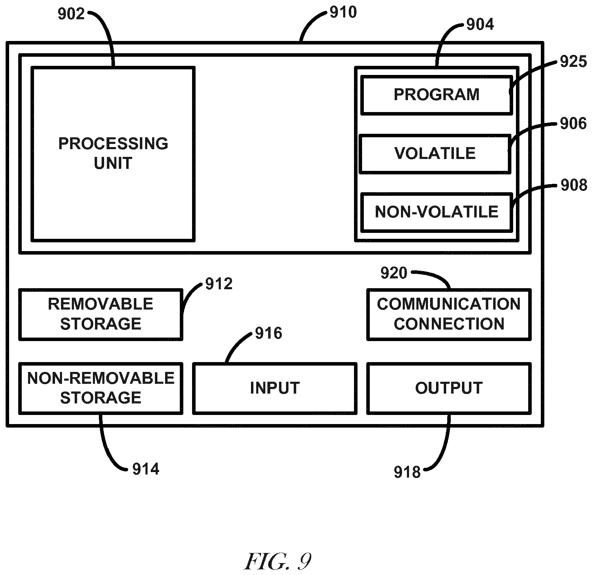

FIG. 9 illustrates, by way of example, a block diagram of an embodiment of a computing device 900. One or more of the foregoing embodiments of SPE 102, the mobile device 106, the classification device 110A-110C, sound classifier circuitry 204, sound profile manager circuitry 206, audio codec 602, audio buffer 604, visual profiler circuitry 610, image-based object detection circuitry 612, microphone directional focus circuitry 614, or other circuitry or devices can include at least a portion of a computing device, such as the computing device 900 of FIG. 9. The SPM 500 can be stored in a memory, such as a memory 904. In one or more embodiments, multiple such computer systems are utilized in a distributed network to implement multiple components in a transaction based environment. An object-oriented, service-oriented, or other architecture may be used to implement such functions and communicate between the multiple systems and components. One example computing device in the form of a computer 910 may include a processing unit 902, memory 904, removable storage 912, and non-removable storage 914. Memory 904 may include volatile memory 906 and non-volatile memory 908. Computer 910 may include - or have access to - a computing environment that includes - a variety of computer-readable media, such as volatile memory 906 and non-volatile memory 908, removable storage 912 and non-removable storage 914. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 910 may include or have access to a computing environment that includes input 916, output 918, and a communication connection 920. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a machine-readable storage device are executable by the processing unit 902 of the computer 910. A hard drive, CD-ROM, and RAM are some examples of articles including a non-transitory computer-readable medium. For example, a computer program 925 capable of providing instructions, which when executed by the processing unit 902 or other machine capable of executing the instructions, cause the processing unit to perform allocation or assignment of PCI based on a location of a small cell, such as a small cell that is being deployed. The instructions can be saved on a CD-ROM and loaded from the CD-ROM to a hard drive of the computer 910. The computer-readable instructions can allow the computer 910 (e.g., the processing unit 902) to implement the conflict detection, conflict avoidance, position determination, alert issuance, or other operations or methods.

Embodiments provide a superior sound detection technology, such as to help increase a safety of a home or other building.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in this document, the terms "first," "second," and "third," etc. are used merely as labels, and are not intended to impose numerical requirements on their objects.

Although a few embodiments have been described in detail above, other modifications are possible. For example, the logic flows depicted in the FIGS. do not require the particular order shown, or sequential order, to achieve desirable results. Other steps can be provided, or steps can be eliminated, from the described flows, and other components can be added to, or removed from, the described systems. Other embodiments can be within the scope of the following claims.

## Claims

1. A device (110A, 110B, 110C, 200) comprising:
a microphone (202);
sound classifier circuitry (204) to analyze signals from the microphone (202), splice segments of the signals, and determine a profile for each of the spliced segments, the profile indicating one or more spectral, time, or amplitude characteristics of the signals;
a sound profile memory (104B) to store sound profiles of audio sources (112A, 112B, 112C) in a building (108) in which the device (110A, 110B, 110C) resides; and
sound profile manager circuitry (206) to determine whether the profile sufficiently matches a sound profile of the sound profile memory (104B) and, in response to a determination that the sound profile does not sufficiently match any sound profiles in the sound profile memory (104B), provide a communication to a sound profile exchange (102) remote to the device (110A, 110B, 110C, 200), the communication requesting the sound profile exchange (102) to determine an audio source (112A, 112B, 112C) to associate with the sound profile using a remote sound profile memory (104A) to determine whether the profile sufficiently matches a sound profile of the remote sound profile memory (104A)
wherein the sound profile manager circuitry (206) is further configured to, in response to a determination that the sound profile does not sufficiently match any sound profiles in the sound profile memory (104B) or the remote sound profile memory (104A), provide a communication to a mobile device (106), the communication requesting a use of the mobile device (106) to identify an audio source (112A, 112B, 112C) of the sound profile, and in response to receiving an identity of an audio source (112A, 112B, 112C) from the mobile device (106), associate the sound profile with the audio source (112A, 112B, 112C) in the sound profile memory (104B).

2. The device (110A, 110B, 110C, 200) of claim 1, further comprising:
a camera (208); and
wherein the sound classifier (204) is configured to associate the sound profile with data indicating a source of sound from which audio of the sound profile segment originated based on image data from the camera (208).

3. The device (110A, 110B, 110C, 200) of claim 1 or claim 2, wherein the sound profile manager circuitry (206) is to provide the communication to the mobile device (106) to request the user to indicate whether the user is to be alerted in response to determining that a sound profile from the sound classifier circuitry (204) sufficiently matches the sound profile, and wherein the sound profile manager circuitry (204) is further to provide a communication to the mobile device (106) indicating that the audio source (112A, 112B, 112C) has been detected.

4. The device (110A, 110B, 110C, 200) of any preceding claim, wherein the sound profile manager circuitry (206) is further configured to, in response to receiving an identifier of an audio source (112A, 112B, 122C) from the sound profile exchange (102) indicating the audio source (112A, 112B, 122C) for the sound profile, provide a communication to the mobile device (106) requesting the user to indicate whether the user is to be alerted in response to a determination that a sound profile from the sound classifier circuitry (204) sufficiently matches a sound profile associated with the audio source (112A, 112B, 122C) and associate the sound profile with the audio source (112A, 112B, 122C) in the sound profile memory (104B).

5. The device (110A, 110B, 110C, 200) of any of any preceding claim, wherein the sound profile manager circuitry (206) is further to, in response to receiving a communication from the sound profile exchange (102) indicating that an audio source (112A, 112B, 122C) for the sound profile cannot be determined, provide a communication to the mobile device (106) requesting the user to identify an audio source (112A, 112B, 122C) of the audio associated with the sound profile and indicate whether the user is to be alerted in response to a determination that a sound profile from the sound classifier circuitry (204) sufficiently matches a sound profile associated with the audio source (112A, 112B, 122C) and, in response to receiving a communication, from the sound profile exchange (102), indicating an audio source (112A, 112B, 122C) from the mobile device (106), associate the sound profile, in the sound profile memory (104B), with the audio source (112A, 112B, 122C).

6. The device (110A, 110B, 110C, 200) of any preceding claim, wherein the sound profile comprises spectral content, time characteristics, and amplitude characteristics, wherein the spectral content identifies frequency content of the signals, the time characteristics identify an amount of time the signals include audio and an amount of time between sounds of the audio, and the amplitude characteristics indicate a maximum and minimum amplitude of the audio.

7. The device (110A, 110B, 110C, 200) of claim 6, wherein the sound profile further comprises room characteristics that identify characteristics of a room in which the device (200) is situated that affect the audio.

8. The device (110A, 110B, 110C, 200) of claim 7, wherein the room characteristics comprise a length, width, and height of the room.

9. The device (110A, 110B, 110C, 200) of claim 8, wherein the room characteristics comprise a material used to enclose the room.

10. A method comprising:
converting, by a microphone (202), sound waves to electrical signals;
analyzing, at sound classifier circuitry (204), the electrical signals;
splicing, at the sound classifier circuitry (204), segments of the electrical signals with different spectral, time, or amplitude characteristics therefrom;
determining, at the sound classifier circuitry (204), a profile for each of the spliced segments, the profile indicating spectral content, time characteristics, and amplitude characteristics of the spliced segment;
determining, using sound profile manager circuitry (206), whether the profile sufficiently matches a sound profile stored in a local sound profile memory (104B), the sound profile memory (104B) storing sound profiles of audio sources (112A, 122B, 112C) detected in a building in or around which the microphone (202) resides;
in response to determining the sound profile does not sufficiently match any sound profiles in the sounds profile memory (104B), providing a communication to a sound profile exchange (102) remote to the sound profile manager circuitry (206), the communication requesting the sound profile exchange (102) to determine an audio source (112A, 112B, 112C) to associate with the sound profile using a remote sound profile memory (104A) to determine whether the profile sufficiently matches a sound profile of the remote sound profile memory (104A);
in response to a determination that the sound profile does not sufficiently match any sound profiles in the sound profile memory (104B) or the remote sound profile memory (104A), providing a communication to a mobile device (106), the communication requesting a use of the mobile device (106) to identify an audio source (112A, 112B, 112C) of the sound profile; and
in response to receiving an identity of an audio source (112A, 112B, 112C) from the mobile device (106), associating the sound profile with the audio source (112A, 112B, 112C) in the sound profile memory (104B).

11. The method of claim 10, further comprising associating, by the sound classifier circuitry (204), the sound profile with data indicating a source of sound from which audio of the sound profile segment originated based on video data from a camera (208).

12. The method of claim 10 or claim 11, wherein the communication to the mobile device (106) further includes a request to the user to indicate whether the user is to be alerted in response to determining that a sound profile from the sound classifier circuitry (204) sufficiently matches the sound profile, and the method further comprises, providing, by the sound profile manager circuitry (206), a communication to the mobile device (106) indicating that the audio source has been detected.

13. The method of any of claims 10 to 12, further comprising:
in response to receiving an identifier of an audio source (112A, 112B, 112C) from the sound profile exchange (102) indicating the audio source (112A, 112B, 112C) for the sound profile, providing, by the sound profile manager circuitry (206), a communication to the mobile device (106) requesting the user to indicate whether the user is to be alerted in response to determining that a sound profile from the sound classifier circuitry (204) sufficiently matches a sound profile associated with the audio source (112A, 122B, 112C); and
associating the sound profile with the audio source (112A, 122B, 112C) in the sound profile memory (104B).

14. The method of any of claims 10-13, including receiving a communication from the sound profile exchange (102) at the sound profile manager circuitry (206) indicating that an audio source (112A, 112B, 122C) for the sound profile cannot be determined, providing a communication to the mobile device (106) requesting the user to identify an audio source (112A, 112B, 122C) of the audio associated with the sound profile and indicate whether the user is to be alerted in response to a determination that a sound profile from the sound classifier circuitry (204) sufficiently matches a sound profile associated with the audio source (112A, 112B, 122C) and, in response to receiving a communication, from the sound profile exchange (102), indicating an audio source (112A, 112B, 122C) from the mobile device (106), associate the sound profile, in the sound profile memory (104B), with the audio source (112A, 112B, 122C).

15. The method of any of claims 10 to 14, wherein the sound profile comprises spectral content, time characteristics, and amplitude characteristics, wherein the spectral content identifies frequency content of the signals, the time characteristics identify an amount of time the signals include audio and an amount of time between sounds of the audio, and the amplitude characteristics indicate a maximum and minimum amplitude of the audio.

## Patentansprüche

1. Vorrichtung (110A, 110B, 110C, 200), umfassend:
ein Mikrofon (202);
Klangklassifizierungsschaltung (204) zum Analysieren von Signalen vom Mikrofon (202), Zusammenfügen von Segmenten der Signale und Ermitteln eines Profils für jedes der zusammengefügten Segmente, wobei das Profil eine oder mehrere Spektral-, Zeit- oder Amplitudeneigenschaften der Signale angibt;
einen Klangprofilspeicher (104B) zum Speichern von Klangprofilen von Audioquellen (112A, 112B, 112C) in einem Gebäude (108), in dem sich die Vorrichtung (110A, 110B, 110C) befindet; und
Klangprofilmanagerschaltung (206), um zu ermitteln, ob das Profil ausreichend mit einem Klangprofil des Klangprofilspeichers (104B) übereinstimmt, und als Reaktion auf eine Feststellung, dass das Klangprofil nicht ausreichend mit Klangprofilen im Klangprofilspeicher (104B) übereinstimmt, eine Mitteilung für einen Klangprofilaustausch (102) entfernt von der Vorrichtung (110A, 110B, 110C, 200) bereitzustellen, wobei die Mitteilung den Klangprofilaustausch (102) anfordert, um eine Audioquelle (112A, 112B, 112C) zu ermitteln, die dem Klangprofil unter Verwendung eines entfernten Klangprofilspeichers (104A) zugeordnet werden soll, um zu ermitteln, ob das Profil ausreichend mit einem Klangprofil des entfernten Klangprofilspeichers (104A) übereinstimmt
wobei die Klangprofilmanagerschaltung (206) ferner so konfiguriert ist, dass als Reaktion auf eine Feststellung, dass das Klangprofil nicht ausreichend mit Klangprofilen im Klangprofilspeicher (104B) oder im entfernten Klangprofilspeicher (104A) übereinstimmt, einer mobilen Vorrichtung (106) eine Mitteilung bereitgestellt wird, wobei die Mitteilung eine Verwendung der mobilen Vorrichtung (106) zum Bezeichnen einer Audioquelle (112A, 112B, 112C) des Klangprofils anfordert, und als Reaktion auf ein Empfangen einer Identität einer Audioquelle (112A, 112B, 112C) von der mobilen Vorrichtung (106) das Klangprofil der Audioquelle (112A, 112B, 112C) im Klangprofilspeicher (104B) zugeordnet wird.

2. Vorrichtung (110A, 110B, 110C, 200) nach Anspruch 1, ferner umfassend:
eine Kamera (208); und
wobei der Klangklassifizierer (204) so konfiguriert ist, dass dem Klangprofil Daten zugeordnet werden, die auf der Grundlage von Bilddaten von der Kamera (208) eine Klangquelle angeben, von der Audio des Klangprofilsegments stammt.

3. Vorrichtung (110A, 110B, 110C, 200) nach Anspruch 1 oder Anspruch 2, wobei die Klangprofilmanagerschaltung (206) die Mitteilung für die mobile Vorrichtung (106) bereitstellen soll, um den Benutzer aufzufordern, anzugeben, ob der Benutzer als Reaktion auf die Feststellung alarmiert werden soll, dass ein Klangprofil von der Klangklassifizierungsschaltung (204) ausreichend mit dem Klangprofil übereinstimmt, und wobei die Klangprofilmanagerschaltung (204) ferner dazu dient, eine Mitteilung für die mobile Vorrichtung (106) bereitzustellen, die angibt, dass die Audioquelle (112A, 112B, 112C) erkannt wurde.

4. Vorrichtung (110A, 110B, 110C, 200) nach einem der vorhergehenden Ansprüche, wobei die Klangprofilmanagerschaltung (206) ferner so konfiguriert ist, dass als Reaktion auf ein Empfangen einer Kennung einer Audioquelle (112A, 112B, 122C) vom Klangprofilaustausch (102), der die Audioquelle (112A, 112B, 122C) für das Klangprofil angibt, eine Mitteilung für die mobile Vorrichtung (106) bereitgestellt wird, die den Benutzer auffordert, anzugeben, ob der Benutzer als Reaktion auf eine Feststellung alarmiert werden soll, dass ein Klangprofil von der Klangklassifizierungsschaltung (204) ausreichend mit einem Klangprofil übereinstimmt, das der Audioquelle (112A, 112B, 122C) zugeordnet ist, und das Klangprofil der Audioquelle (112A, 112B, 122C) im Klangprofilspeicher (104B) zugeordnet wird.

5. Vorrichtung (110A, 110B, 110C, 200) nach einem der vorhergehenden Ansprüche, wobei die Klangprofilmanagerschaltung (206) ferner dazu dient, als Reaktion auf ein Empfangen einer Mitteilung vom Klangprofilaustausch (102), die angibt, dass eine Audioquelle (112A, 112B, 122C) für das Klangprofil nicht ermittelt werden kann, eine Mitteilung für die mobile Vorrichtung (106) bereitzustellen, die den Benutzer auffordert, eine Audioquelle (112A, 112B, 122C) des Audios zu bezeichnen, die dem Klangprofil zugeordnet ist, und anzugeben, ob der Benutzer als Reaktion auf eine Feststellung alarmiert werden soll, dass ein Klangprofil aus der Klangklassifizierungsschaltung (204) ausreichend mit einem Klangprofil (112A, 112B, 122C) übereinstimmt, das der Klangquelle zugeordnet ist, und als Reaktion auf ein Empfangen einer Mitteilung vom Klangprofilaustausch (102), die eine Audioquelle (112A, 112B, 122C) von der mobilen Vorrichtung (106) angibt, das Klangprofil im Klangprofilspeicher (104B) der Audioquelle (112A, 112B, 122C) zuzuordnen.

6. Vorrichtung (110A, 110B, 110C, 200) nach einem der vorhergehenden Ansprüche, wobei das Klangprofil Spektralinhalt, Zeiteigenschaften und Amplitudeneigenschaften umfasst, wobei der Spektralinhalt den Frequenzinhalt der Signale kennzeichnet, wobei die Zeiteigenschaften eine Zeitdauer, während der die Signale Audio beinhalten, und eine Zeitdauer zwischen Klängen des Audios bezeichnen und die Amplitudeneigenschaften eine maximale und minimale Amplitude des Audios angeben.

7. Vorrichtung (110A, 110B, 110C, 200) nach Anspruch 6, wobei das Klangprofil ferner Raumeigenschaften umfasst, die Eigenschaften eines Raums bezeichnen, in dem sich die Vorrichtung (200) befindet, die das Audio beeinflussen.

8. Vorrichtung (110A, 110B, 110C, 200) nach Anspruch 7, wobei die Raumeigenschaften eine Länge, Breite und Höhe des Raums umfassen.

9. Vorrichtung (110A, 110B, 110C, 200) nach Anspruch 8, wobei die Raumeigenschaften ein Material umfassen, das verwendet wird, um den Raum zu umschließen.

10. Verfahren, umfassend:
Umwandeln von Klangwellen in elektrische Signale durch ein Mikrofon (202);
Analysieren der elektrischen Signale an einer Klangklassifizierungsschaltung (204);
Zusammenfügen von Segmenten der elektrischen Signale mit unterschiedlichen Spektral-, Zeit- oder Amplitudeneigenschaften daraus an der Klangklassifizierungsschaltung (204);
Ermitteln eines Profils für jedes der zusammengefügten Segmente an der Klangklassifizierungsschaltung (204), wobei das Profil den Spektralinhalt, die Zeiteigenschaften und die Amplitudeneigenschaften des zusammengefügten Segments angibt;
Ermitteln unter Verwendung einer Klangprofilmanagerschaltung (206), ob das Profil ausreichend mit einem in einem lokalen Klangprofilspeicher (104B) gespeicherten Klangprofil übereinstimmt, wobei der Klangprofilspeicher (104B) Klangprofile von Audioquellen (112A, 122B, 112C) speichert, die in einem Gebäude erkannt werden, in oder um das herum sich das Mikrofon (202) befindet;
als Reaktion auf das Feststellen, dass das Klangprofil nicht ausreichend mit Klangprofilen im Klangprofilspeicher (104B) übereinstimmt, Bereitstellen einer Mitteilung für einen Klangprofilaustausch (102) entfernt von der Klangprofilmanagerschaltung (206), wobei die Mitteilung den Klangprofilaustausch (102) anfordert, um eine Audioquelle (112A, 112B, 112C) zu ermitteln, die dem Klangprofil unter Verwendung eines entfernten Klangprofilspeichers (104A) zugeordnet werden soll, um zu ermitteln, ob das Profil ausreichend mit einem Klangprofil des entfernten Klangprofilspeichers (104A) übereinstimmt;
als Reaktion auf eine Feststellung, dass das Klangprofil nicht ausreichend mit Klangprofilen im Klangprofilspeicher (104B) oder im entfernten Klangprofilspeicher (104A) übereinstimmt, Bereitstellen einer Mitteilung für eine mobile Vorrichtung (106), wobei die Mitteilung eine Verwendung der mobilen Vorrichtung (106) zum Bezeichnen einer Audioquelle (112A, 112B, 112C) des Klangprofils anfordert; und als Reaktion auf ein Empfangen einer Identität einer Audioquelle (112A, 112B, 112C) Zuordnen der mobilen Vorrichtung (106) zum Klangprofil der Audioquelle (112A, 112B, 112C) im Klangprofilspeicher (104B).

11. Verfahren nach Anspruch 10, ferner umfassend Zuordnen des Klangprofils durch die Klangklassifizierungsschaltung (204) zu Daten, die auf der Grundlage von Videodaten von einer Kamera (208) eine Klangquelle angeben, von der Audio des Klangprofilsegments stammt.

12. Verfahren nach Anspruch 10 oder Anspruch 11, wobei die Mitteilung für die mobile Vorrichtung (106) ferner eine Aufforderung an den Benutzer beinhaltet, anzugeben, ob der Benutzer als Reaktion auf das Feststellen alarmiert werden soll, dass ein Klangprofil aus der Klangklassifizierungsschaltung (204) ausreichend mit dem Klangprofil übereinstimmt, und das Verfahren ferner Bereitstellen einer Mitteilung für die mobile Vorrichtung (106) durch die Klangprofilmanagerschaltung (206) umfasst, die angibt, dass die Audioquelle erkannt wurde.

13. Verfahren nach einem der Ansprüche 10 bis 12, ferner umfassend:
als Reaktion auf ein Empfangen einer Kennung einer Audioquelle (112A, 112B, 112C) vom Klangprofilaustausch (102), der die Audioquelle (112A, 112B, 112C) für das Klangprofil angibt, Bereitstellen einer Mitteilung für die mobile Vorrichtung (106) durch die Klangprofilmanagerschaltung (206), die den Benutzer auffordert, anzugeben, ob der Benutzer als Reaktion auf das Feststellen alarmiert werden soll, dass ein Klangprofil von der Klangklassifizierungsschaltung (204) ausreichend mit einem Klangprofil übereinstimmt, das der Audioquelle (112A, 122B, 112C) zugeordnet ist; und
Zuordnen des Klangprofils zur Audioquelle (112A, 122B, 112C) im Klangprofilspeicher (104B).

14. Verfahren nach einem der Ansprüche 10 bis 13, einschließlich Empfangen einer Mitteilung vom Klangprofilaustausch (102) an der Klangprofilmanagerschaltung (206), die angibt, dass eine Audioquelle (112A, 112B, 122C) für das Klangprofil nicht ermittelt werden kann, Bereitstellen einer Mitteilung für die mobile Vorrichtung (106), die den Benutzer auffordert, eine Audioquelle (112A, 112B, 122C) zu bezeichnen, die dem Klangprofil zugeordnet ist, und anzugeben, ob der Benutzer als Reaktion auf eine Feststellung alarmiert werden soll, dass ein Klangprofil von der Klangklassifizierungsschaltung (204) ausreichend mit einem Klangprofil übereinstimmt, das der Audioquelle (112A, 112B, 122C) zugeordnet ist, und als Reaktion auf ein Empfangen einer Mitteilung vom Klangprofilaustausch (102), die eine Audioquelle (112A, 112B, 122C) von der mobilen Vorrichtung (106) angibt, Zuordnen des Klangprofils im Klangprofilspeicher (104B) zu der Audioquelle (112A, 112B, 122C).

15. Verfahren nach einem der Ansprüche 10 bis 14, wobei das Klangprofil Spektralinhalt, Zeiteigenschaften und Amplitudeneigenschaften umfasst, wobei der Spektralinhalt den Frequenzinhalt der Signale kennzeichnet, wobei die Zeiteigenschaften eine Zeitdauer, während der die Signale Audio beinhalten, und eine Zeitdauer zwischen Klängen des Audios bezeichnen und die Amplitudeneigenschaften eine maximale und minimale Amplitude des Audios angeben.

## Revendications

1. Dispositif (110A, 110B, 110C, 200) comprenant :
un microphone (202) ;
des circuits de classificateur sonore (204), permettant d'analyser des signaux provenant du microphone (202), d'épisser des segments des signaux et de déterminer un profil pour chacun des segments épissés, le profil indiquant une ou plusieurs caractéristiques spectrales, temporelles ou d'amplitude des signaux ;
une mémoire de profils sonores (104B), permettant de stocker des profils sonores de sources audio (112A, 112B, 112C) dans un bâtiment (108) dans lequel se trouve le dispositif (110A, 110B, 110C) ; et
des circuits de gestionnaire de profils sonores (206), permettant de déterminer si le profil correspond suffisamment à un profil sonore de la mémoire de profils sonores (104B) et, en réponse à une détermination du fait que le profil sonore ne correspond pas suffisamment à de quelconques profils sonores dans la mémoire de profils sonores (104B), de fournir une communication à un échange de profils sonores (102) à distance du dispositif (110A, 110B, 110C, 200), la communication demandant l'échange de profils sonores (102) pour déterminer une source audio (112A, 112B, 112C) à associer au profil sonore à l'aide d'une mémoire de profils sonores à distance (104A) pour déterminer si le profil correspond suffisamment à un profil sonore de la mémoire de profils sonores à distance (104A) ;
dans lequel les circuits de gestionnaire de profils sonores (206) sont en outre configuré pour, en réponse à une détermination du fait que le profil sonore ne correspond pas suffisamment à de quelconques profils sonores dans la mémoire de profils sonores (104B) ou dans la mémoire de profils sonores à distance (104A), fournir une communication avec un dispositif mobile (106), la communication demandant une utilisation du dispositif mobile (106) pour identifier une source audio (112A, 112B, 112C) du profil sonore et, en réponse à la réception d'une identité d'une source audio (112A, 112B, 112C) provenant du dispositif mobile (106), pour associer le profil sonore à la source audio (112A, 112B, 112C) dans la mémoire de profils sonores (104B).

2. Dispositif (110A, 110B, 110C, 200) selon la revendication 1, comprenant en outre :
une caméra (208) ; et
dans lequel le classificateur sonore (204) est configuré pour associer le profil sonore à des données indiquant une source de son à partir de laquelle provenait l'audio du segment de profil sonore, sur la base de données d'image provenant de la caméra (208).

3. Dispositif (110A, 110B, 110C, 200) selon la revendication 1 ou la revendication 2, dans lequel les circuits de gestionnaire de profils sonores (206) doivent fournir la communication au dispositif mobile (106), pour demander à l'utilisateur d'indiquer si l'utilisateur doit être alerté en réponse à la détermination du fait qu'un profil sonore provenant des circuits de classificateur sonore (204) correspond suffisamment au profil sonore et dans lequel les circuits de gestionnaire de profils sonores (204) sont en outre destinés à fournir une communication au dispositif mobile (106) indiquant que la source audio (112A, 112B, 112C) a été détectée.

4. Dispositif (110A, 110B, 110C, 200) selon l'une quelconque des revendications précédentes, dans lequel les circuits de gestionnaire de profils sonores (206) sont en outre configurés pour, en réponse à la réception d'un identifiant d'une source audio (112A, 112B, 122C) provenant de l'échange de profils sonores (102) indiquant la source audio (112A, 112B, 122C) pour le profil sonore, fournir une communication au dispositif mobile (106) demandant à l'utilisateur d'indiquer si l'utilisateur doit être alerté, en réponse à une détermination du fait qu'un profil sonore provenant des circuits de classificateur sonore (204) correspond suffisamment à un profil sonore associé à la source audio (112A, 112B, 122C) et pour associer le profil sonore à la source audio (112A, 112B, 122C) dans la mémoire de profils sonores (104B).

5. Dispositif (110A, 110B, 110C, 200) selon l'une quelconque des revendications précédentes, dans lequel les circuits de gestionnaire de profils sonores (206) est en outre configuré pour, en réponse à la réception d'une communication provenant de l'échange de profils sonores (102) indiquant l'impossibilité de détermination d'une source audio (112A, 112B, 122C) pour le profil sonore, fournir une communication au dispositif mobile (106), demandant à l'utilisateur d'identifier une source audio (112A, 112B, 122C) de l'audio associé au profil sonore et pour indiquer si l'utilisateur doit être alerté en réponse à une détermination du fait qu'un profil sonore provenant des circuits de classificateur sonore (204) correspond suffisamment à un profil sonore associé à la source audio (112A, 112B, 122C) et, en réponse à la réception d'une communication, provenant de l'échange de profils sonores (102) indiquant une source audio (112A, 112B, 122C) provenant du dispositif mobile (106), pour associer le profil sonore de la mémoire de profils sonores (104B) à la source audio (112A, 112B, 122C).

6. Dispositif (110A, 110B, 110C, 200) selon l'une quelconque des revendications précédentes, dans lequel le profil sonore comprend un contenu spectral, des caractéristiques temporelles et des caractéristiques d'amplitude, dans lequel le contenu spectral identifie le contenu fréquentiel des signaux, les caractéristiques temporelles identifient une durée, les signaux incluent l'audio et une durée entre des sons de l'audio et les caractéristiques d'amplitude indiquent une amplitude maximale et minimale de l'audio.

7. Dispositif (110A, 110B, 110C, 200) selon la revendication 6, dans lequel le profil sonore comprend en outre des caractéristiques de pièce qui identifient des caractéristiques d'une pièce dans laquelle se trouve le dispositif (200) qui affectent l'audio.

8. Dispositif (110A, 110B, 110C, 200) selon la revendication 7, dans lequel les caractéristiques de la pièce comprennent une longueur, une largeur et une hauteur de la pièce.

9. Dispositif (110A, 110B, 110C, 200) selon la revendication 8, dans lequel les caractéristiques de la pièce comprennent un matériau utilisé pour confiner la pièce.

10. Procédé comprenant :
la conversion, par un microphone (202), d'ondes sonores en signaux électriques ;
l'analyse, au niveau des circuits de classificateur sonore (204), des signaux électriques ;
l'épissure, au niveau des circuits de classificateur sonore (204), de segments des signaux électriques avec différentes caractéristiques spectrales, temporelles ou d'amplitude qui en proviennent ;
la détermination, au niveau des circuits de classificateur sonore (204), d'un profil pour chacun des segments épissés, le profil indiquant un contenu spectral, des caractéristiques temporelles et des caractéristiques d'amplitude du segment épissé ;
la détermination, à l'aide de circuits de gestionnaire de profils sonores (206), du fait de savoir si le profil correspond suffisamment à un profil sonore stocké dans une mémoire locale de profils sonores (104B), la mémoire de profils sonores (104B) stockant des profils sonores de sources audio (112A, 122B, 112C) détectés dans un bâtiment dans lequel ou autour duquel se trouve le microphone (202) ;
en réponse à la détermination que le profil sonore ne correspond pas suffisamment à de quelconques profils sonores dans la mémoire de profils sonores (104B), la fourniture d'une communication à un échange de profils sonores (102) à distance des circuits de gestionnaire de profils sonores (206), la communication demandant l'échange de profils sonores (102) pour déterminer une source audio (112A, 112B, 112C) à associer au profil sonore à l'aide d'une mémoire de profils sonores à distance (104A), pour déterminer si le profil correspond suffisamment à un profil sonore de la mémoire de profils sonores à distance (104A) ;
en réponse à une détermination du fait que le profil sonore ne correspond pas suffisamment à de quelconques profils sonores dans la mémoire de profils sonores (104B) ou dans la mémoire de profils sonores à distance (104A), la fourniture d'une communication à un dispositif mobile (106), la communication demandant une utilisation du dispositif mobile (106) pour identifier une source audio (112A, 112B, 112C) du profil sonore ; et, en réponse à la réception d'une identité d'une source audio (112A, 112B, 112C) provenant du dispositif mobile (106), l'association du profil sonore à la source audio (112A, 112B, 112C) dans la mémoire de profils sonores (104B).

11. Procédé selon la revendication 10, comprenant en outre l'association, par les circuits de classificateur sonore (204), du profil sonore à des données indiquant une source sonore à partir de laquelle provenait de l'audio du segment de profil sonore sur la base de données vidéo provenant d'une caméra (208).

12. Procédé selon la revendication 10 ou la revendication 11, dans lequel la communication avec le dispositif mobile (106) comprend en outre une demande à l'utilisateur pour indiquer si l'utilisateur doit être alerté en réponse à la détermination qu'un profil sonore provenant des circuits de classificateur sonore (204) correspond suffisamment au profil sonore, le procédé comprenant en outre la fourniture, par les circuits de gestionnaire de profils sonores (206), d'une communication avec le dispositif mobile (106) indiquant que la source audio a été détectée.

13. Procédé selon l'une quelconque des revendications 10 à 12, comprenant en outre :
en réponse à la réception d'un identifiant d'une source audio (112A, 112B, 112C) provenant de l'échange de profils sonores (102) et indiquant la source audio (112A, 112B, 112C) pour le profil sonore, la fourniture, par les circuits de gestionnaire de profils sonores (206), d'une communication avec le dispositif mobile (106) demandant à l'utilisateur d'indiquer si l'utilisateur doit être alerté en réponse à la détermination qu'un profil sonore provenant des circuits de classificateur sonore (204) correspond suffisamment à un profil sonore associé à la source audio (112A, 122B, 112C) ; et
l'association du profil sonore à la source audio (112A, 122B, 112C) dans la mémoire de profils sonores (104B).

14. Procédé selon l'une quelconque des revendications 10 à 13, comprenant la réception d'une communication provenant de l'échange de profils sonores (102) au niveau des circuits de gestionnaire de profils sonores (206) indiquant qu'une source audio (112A, 112B, 122C) pour le profil sonore ne peut pas être déterminée, la fourniture d'une communication avec le dispositif mobile (106) demandant à l'utilisateur d'identifier une source audio (112A, 112B, 122C) de l'audio associé au profil sonore et d'indiquer si l'utilisateur doit être alerté en réponse à une détermination qu'un profil sonore provenant des circuits de classificateur sonore (204) correspond suffisamment à un profil sonore associé à la source audio (112A, 112B, 122C) et, en réponse à la réception d'une communication, provenant de l'échange de profils sonores (102), l'indication d'une source audio (112A, 112B, 122C) provenant du dispositif mobile (106), l'association du profil sonore de la mémoire de profils sonores (104B) à la source audio (112A, 112B, 122C).

15. Procédé selon l'une quelconque des revendications 10 à 14, dans lequel le profil sonore comprend un contenu spectral, des caractéristiques temporelles et des caractéristiques d'amplitude, dans lequel le contenu spectral identifie le contenu fréquentiel des signaux, les caractéristiques temporelles identifient une durée pendant laquelle les signaux incluent de l'audio et une durée entre des sons de l'audio et les caractéristiques d'amplitude indiquent une amplitude maximale et minimale de l'audio.
